# EUROPEAN PATENT APPLICATION

(11) **EP 2 587 205 A1**
(43) Date of publication of application: **01.05.2013**
(21) Application number: 11380087.4
(22) Date of filing: 27.10.2011
(51) Int. Cl.: F28C 1/14

(54) **Refrigeration tower optimized for water cooling**

(71) Applicant: Cruz Alonso, Jose Manuel, 28034 Madrid (ES); Cruz Marzo, Rafael, 28034 Madrid (ES); Santana Soria, Juan, 28034 Madrid (ES)
(72) Inventor: Cruz Alonso, Jose Manuel, 28034 Madrid (ES); Cruz Marzo, Rafael, 28034 Madrid (ES); Santana Soria, Juan, 28034 Madrid (ES)
(74) Representative: Jimenez Duch, Rocio

(57) **Abstract**

REFRIGERATION TOWER OPTIMIZED FOR WATER COOLING with a casing (2), a pool (3) a main line (4) to condenser (6) and return to drip pipe (7) for pulverization going through an air current between the external air inlet (10) and a fan (11), which has an air-water exchange battery (12) in the external air inlet (10). The battery (12) has a water inlet (13) from the pool (3) and a water outlet (16) to the drip pipe (7) to return it to the process. It can incorporate two groups of motor pumps to force the water circulation, a first pump (5) that drives towards the condenser (6) and the drip pipe (7) and a second pump (15) towards the battery (12), or a single pump to force the water circulation, arranging its operation towards the condenser (6) and the battery (12).

## Description

### OBJECT OF THE INVENTION

The invention, as expressed in the title of this specification, refers to a refrigeration tower optimized for water cooling, which is a remarkable innovation in its field of application as it provides various advantages and features of novelty to its initial function which represents a remarkable improvement over the currently known in the field.

More particularly, the object of the invention focuses on a refrigerating tower that, in an innovative way, makes a significant pre-cooling of the air stream, thus decreasing its wet bulb temperature and allowing a greater cooling of the process water. Said cooling is performed in an air-water heat exchanger (battery) situated at the air inlet to the cooling tower and the cooling agent is the water of the tower itself, having to oversize the equipment in the power transferred to the battery.

### SCOPE OF THE INVENTION

The scope of the present invention falls within the technical sector of the industry dedicated to the installation and production of refrigeration towers.

### BACKGROUND OF THE INVENTION

Currently, and as reference to the state of the art, it should be noted that the applicant is not aware of the existence of other refrigeration towers or invention of similar application that have structural, technical and constituent characteristics similar to those present in the recommended herein, whose featuring details are conveniently included in the final claims accompanying the present specification.

### EXPLANATION OF THE INVENTION

As it is known, conventional refrigeration towers use an air current that evaporates part of a flow of water immersed in it. The vaporization heat is provided by self-cooling circulating water.

The lowest temperature theoretically attainable in the water is that of the wet bulb at the entrance of the air stream and the minimum practical temperature is three degrees Celsius over said wet bulb.

Therefore, the lower the wet bulb, the lower the cooled water temperature will be.

From said premise what the invention proposes, as it has already been mentioned previously, is a refrigeration tower optimized for water cooling, in which said optimization is given by the fact that it performs a pre-cooling of the air flow, reducing its wet bulb and allowing a greater cooling of the process water.

Said cooling of the air is performed in an air-water exchanger (battery) situated at the air inlet to the cooling tower where the cooling agent is the water of the tower itself, having to oversize the equipment in the power transferred to the battery.

It should be noted that, logically, the opportunity of this resource depends on the wet bulb temperature of the location, and may be inefficient in case of this having elevated values. For example, in Madrid and in the outdoor temperature conditions of the project published by the Spanish Association for Standardization and Certification (AENOR) and to the 0.4 percentile, water between 18 and 21. ° C can be obtained, if humid and dry coinciding temperatures or maximum humidity are considered.

This water can be used to cool any element that is in an upper thermal level, as for example, pre-cooling the ventilation air, refrigerating the cooling equipment condenser, since its application elevates considerably the Coefficient of Performance ("Coefficient of Performance" COP), etc.

On the other hand, among the numerous advantages of the tower advocated herein, the following should be noted as most relevant:
- The Royal Decree on legionnaire's disease is dictated by the tower being an element of risk, regardless of the working temperature, (the working temperature in the tray will be 21°C at most and therefore out of the rank of proliferation of the bacteria), for this reason, we will not be able to avoid the treatment required. However, this may be only in the summer and obviously the contribution of products may be less and therefore the annual cost of treatment can be cheaper.
- Providing water is only necessary 33% of the year, which means a lower cost.
- If the exterior air cooling equipment is used, the electricity used is ten times less than that of a mechanical compression condensed by air or five times if condensed by water (screw or centrifugal compressors).
- If the refrigeration equipment for condensers of mechanical compression devices is used, the COP may increase by 20%.
- If cooled water is needed in extreme winter conditions, this could be obtained almost for free.

In view of the above, it appears that the described refrigeration tower optimized for water cooling represents an innovative structure of structural and constituent characteristics unknown up to now in its field of application, reasons that added to its practical utility, endowed it with sufficient grounds to obtain the privilege of exclusivity requested.

### DESCRIPTION OF THE DRAWINGS

To complement the description being made of the refrigeration tower object of the invention, and in order to help better understand the features of the invention, a set of drawings is attached as an integral part of said description, wherein the following is shown as way of illustration but not limited to:

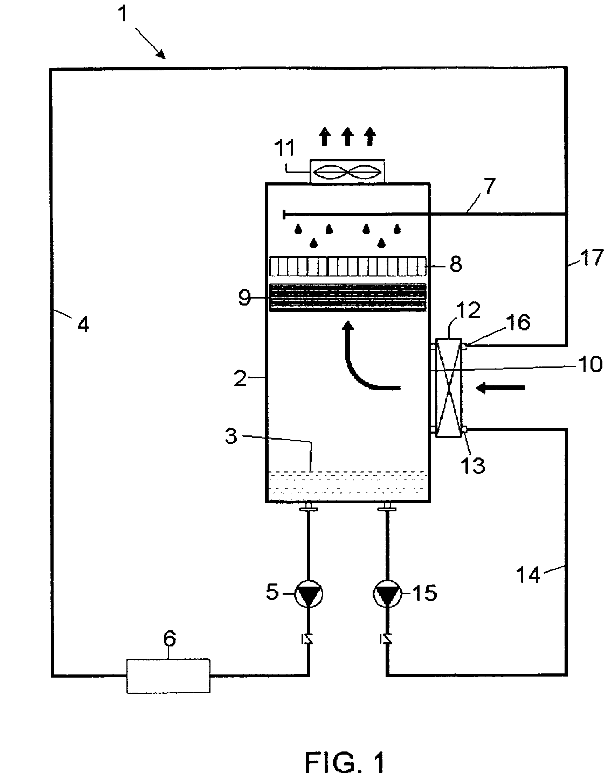

Figure 1 .- Shows a schematic representation of the basic composition of the refrigeration tower optimized for water cooling object of the invention, wherein the main parts and elements that comprises as well as additional elements that distinguish it can be seen in a conventional manner.

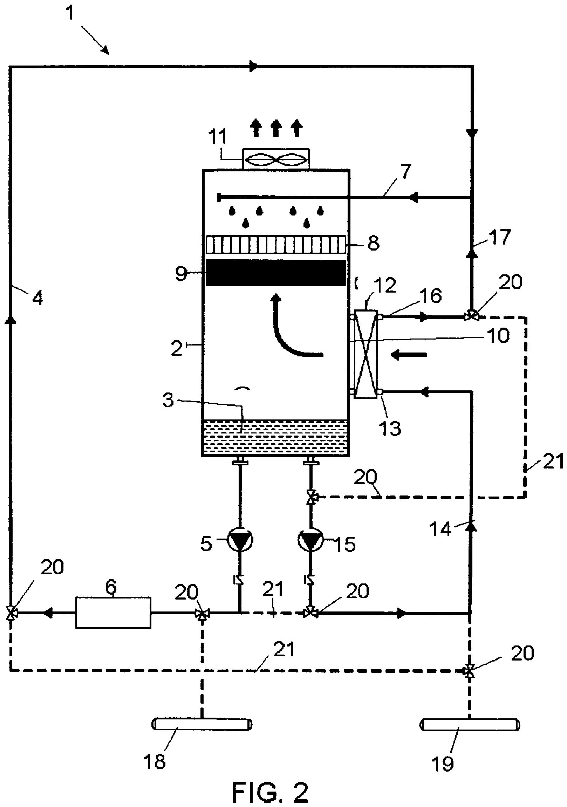

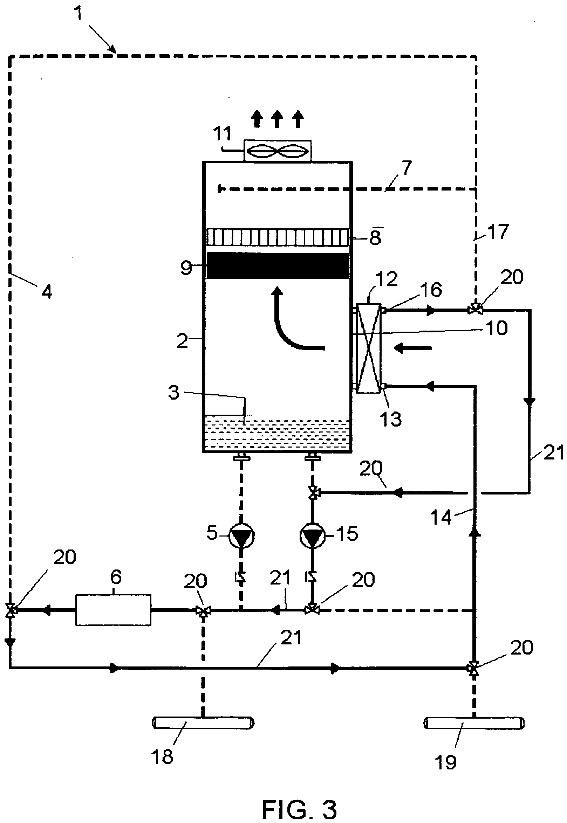

Figures 2, 3 4.- show a schematic representation of a typical application example of the tower of the invention for cooling a condenser of a mechanical compression equipment, wherein motorized valves which allow establishing three different modes of operation respectively shown in said figures, have been added.

### PREFERRED EMBODIMENT OF THE INVENTION

In view of the aforementioned figures, and according to the numbering adopted, a preferred embodiment of the invention can be seen, which comprises the parts and elements listed and described in detail below.

Thus, as shown in Figure 1, the refrigeration tower (1) proposed by the invention is configured, in a conventional way, from a casing (2) inside which there is a pool of water (3); this water is carried by a main line (4) through a bottom outlet, by means of the pulse of a first pump (5), to the condenser (6) of the corresponding installation to provide cool.

Subsequently, the already heated water circulates through said main line (4) back to the casing (2) its top part entering through a drip pipe (7) from which it falls on a droplet separator (8) and a evaporative media (9), which pulverizes and cools it when crossing the air current flowing into the casing (2) from its external air intake (10) to a fan (11) which, located on the upper part of the casing (2), forces said circulation expelling it outwards.

Therefore, from this already known configuration, the tower of the invention includes, in the external air intake (10), a battery (12) consisting of an air-water exchanger so that the air entering the casing (2) goes through said battery (12) where the tower's cooled water itself circulates making the temperature of said air lower.

To do so, said battery (12) has on the one hand, a water inlet (13) linked to a secondary line (14) which provides it with cold water from the pool (3), propelling it through a second pump (15) provided for that purpose, and on the other hand, a heated water outlet (16), which is attached to the drip pipe (7) by a third line (17) to return it to the process of cooling inside the casing (2) of the tower.

Thus, the tower is a conventional equipment, like the ones existing in the market, of any type, to which the battery described (12) is added, located in the external air intake to cool it to a desired temperature, which in turn, will depend on the one needed in the process water.

Needless to say, the tower should be sized to the power of the process water and increased in that of the cooling air battery.

It is worth mentioning that, although in the example described and illustrated in the figures, the installation is completed with two groups of motor pumps (5 and 15), to force the circulation of water among the tower, the process water receptor and the battery, i.e. a first pump (5) that drives the water from the pool (3) through the main line (4) towards the condenser (6) and the drip pipe (7), and a second pump (15) that forces the circulation from the pool (3) to the battery (12), optionally, in an alternative embodiment of the tower, a single pump could also be used, arranging its operation towards the condenser (6) and the battery (12).

Looking at Figures 2, 3 and 4, an example of a typical application of the tower of the invention for the cooling of a mechanical compression equipment condenser, can be seen.

In said application, the embodiment of the tower is basically identical to the one described and shown in figure1, with the difference that in this one, besides showing a sump pump (18) and a return pump (19), several motorized valves (20) have been added, with the corresponding connections (21) between lines, that allow this to perform three differentiated modes of operation and that will be established based on the desired water temperature and the weather conditions of the location.

It should be noted that in said examples and to facilitate understanding of how each of these modes work, the pipelines through which water circulates are shown in solid lines with directional arrows and the pipelines that are not used are shown in dotted lines.

Thus, in Figure 2, the normal operation of the tower (1) with the wet bulb reduced, i.e. by adding the air pre-cooling battery (12), is shown. This mode of operation allows decreasing the water temperature below the wet temperature of the location.

Figure 3 shows the operation of the tower (1) as a "dry" tower, lowering the temperature of the process water by exterior air cooling in the battery (12), in closed circuit and without the involvement of the water atomizers in the interior of the casing (2).

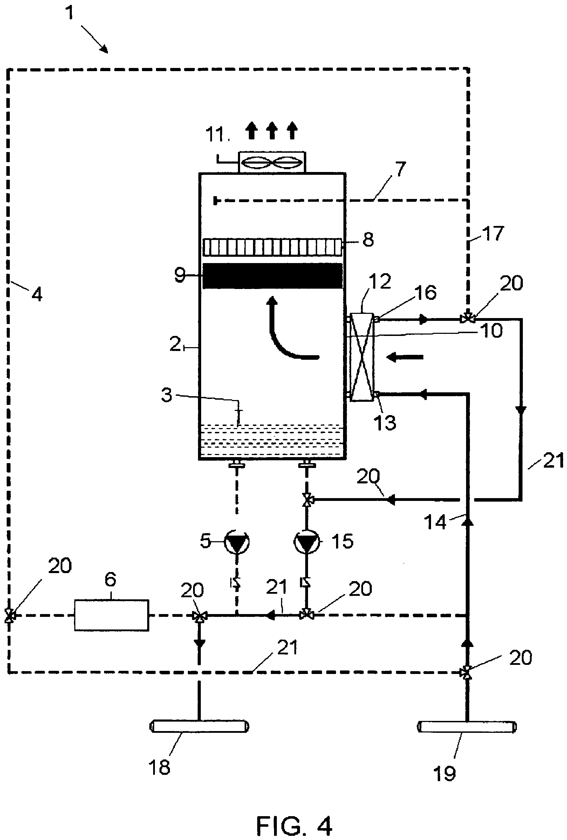

Finally, Figure 4 presents the operation of the tower (1) as a water cooler, which will be able to perform only with low enough exterior temperatures, and in which the activity of the condenser (6) is avoided.

The annual rates of operation would be, in a climate similar to Madrid, from 33% in normal operating mode (Figure 2); 54% in the dry operating mode (figure 3); and of a 23% in the water cooler operating mode (figure 4).

Having the nature of the present invention as well as how to implement it been sufficiently described , it is not considered necessary to extend its explanation for any person skilled in the art to understand its scope and the benefits that derive from it, stating that, within its essentialness, it can be put into practice in other embodiments that differ in detail from that indicated by way of example, and to which the protection claimed will also reach them provided that its fundamental principle is not altered or modified.

## Claims

1. FRIGERATION TOWER OPTIMIZED FOR WATER COOLING which, being of the type comprising a casing (2) with a pool (3) and a main line (4) that leads to the condenser (6) of the installation and back into the casing (2), a drip pipe (7) to pulverize it going through a droplet separator (8) and an evaporative media (9), an air current produced between the external air intake (10) and a fan (11), is **characterized in that** it incorporates, in the external air intake (10), a battery (12) consisting of an air-water exchanger, arranged so that the air that penetrates in the casing (2) goes through said battery (12) and this way the tower's cooled water itself circulates through it.

2. FRIGERATING TOWER OPTIMIZED FOR WATER COOLING according to claim 1, **characterized in that** the battery (12) has a water inlet (13) linked to a secondary line (14) that brings water from the pool (3), and a water outlet (16), which by a third line (17), is attached to the drip pipe (7) returning it to the process of cooling inside the casing (2).

3. FRIGERATING TOWER OPTIMIZED FOR WATER COOLING according to claim 2, **characterized in that** it incorporates two groups of motor pumps to force the circulation of water, a first pump (5) that drives the water from the pool (3) through the main line (4) towards the condenser (6) and drip pipe (7), and a second pump (15) that forces the circulation from the pool (3) towards the battery (12).

4. FRIGERATING TOWER OPTIMIZED FOR WATER COOLING according to claim 2, **characterized in that** it incorporates a single pump to force the circulation of water, arranging its operation towards the condenser (6) and the battery (12).
